Europäisches Patentamt

(19) European Patent Office

Office européen des brevets

(11) Publication number: **0 313 109 B1**

(12) **EUROPEAN PATENT SPECIFICATION**

(45) Date of publication of patent specification :
16.10.91 Bulletin 91/42

(51) Int. Cl.⁵ : **A01J 7/00, A01J 5/04**

(21) Application number : 88120243.6

(22) Date of filing : 11.03.86

(54) Implement for milking animals.

(30) Priority : 12.03.85 NL 8500694
12.03.85 NL 8500693

(60) Publication number of the earlier application in
accordance with Art. 76 EPC : **0 194 729**

(43) Date of publication of application :
26.04.89 Bulletin 89/17

(73) Proprietor : **C. van der Lely N.V.**
**Weverskade 10 P.O. Box 26**
**NL-3155 ZG Maasland (NL)**

(45) Publication of the grant of the patent :
16.10.91 Bulletin 91/42

(72) Inventor : **Van der Lely, Cornelis**
**7, Brüschenrain**
**Zug (CH)**

(84) Designated Contracting States :
AT CH DE FR GB IT LI NL SE

(74) Representative : **Mulder, Herman et al**
**Octrooibureau Van der Lely N.V. Weverskade**
**10 P.O. Box 26**
**NL-3155 ZG Maasland (NL)**

(56) References cited :
FR-A- 2 408 300
JP-A-49 138 077
US-A- 4 010 714
De Telegraaf 4 December 1984, page T23 EEF
BOS: "LAND- EN TUINBOUW"

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

Jouve, 18, rue Saint-Denis, 75001 PARIS

## Description

The invention relates to an implement for milking animals, such as cows, comprising a milking parlour and a milking machine with a milking cluster, whereby the teat cups of the milking cluster are rotatable around a substantially horizontal axis relative to a support and each of the teat cups is capable to move under spring supporting load in a substantially vertical direction independent of the other teat cups.

Such an implement is known from the European patent application, International publication nr. WO 85/02973, publicated July 18, 1985, after the priority date of the present invention, and forming part of the state of the art according to art. 54(3) of the European Patent Convention. In the implement of said state of the art the milking cluster is rotatable around an axis located beneath the milking cluster, as a consequence of which the milking cluster is movable between the end of two arms. To realise a smaller support the implement as described in the opening paragraph is characterized in that the horizontal pivoting axis nearest to the milking cluster is located sidewards of the milking cluster. Although it is possible that the teat cups are pivotable all together around said axis, in a favourable embodiment of the invention each of the teat cups is separately rotatable around said axis by means of teat cup arms. In this embodiment the movement of each of the teat cups is based by spring supporting load from the support. By this spring-loaded structure of the individual teat cups of the milking cluster, each teat cup can assume a position in the vertical direction, which is adapted to the shape of the udder of the animal. In accordance with another characteristic of the invention, each of the teat cups of the milking cluster is rotatable around an associated vertical hinge pin by means of pneumatic or hydraulic operating drive means, so that each teat cup can be brought relative to the other teat cups to a position adapted to the position of the relevant teat of the udder of the animal.

In accordance with a further characteristic of the invention means are provided for automatically applying the milking cluster from the rear of the animal and coupling the milking cluster to the udder of the animal.

In accordance with another characteristic of the invention a teat cup is provided with a substantially funnel-shaped, flexible catching device. Using such a catching device, the relevant teat can be guided into the teat cup, which can significantly facilitate applying the milking cluster.

In accordance with a characteristic of the invention a cover device is provided for covering the milking cluster at instants at which the milking cluster can be covered by the cover device during a part of its travel. Covering the milking cluster is, for example, important when the milking cluster is near the posterior of the animal, as then the animal might foul the milking cluster. In accordance with the invention the cover device is provided with an approximately horizontally extending plate, the rear end of the plate being at a lower level than its front and when the cover device is in a stationary position. Thus, anything falling on the cover device can be discharged via the rear end of the plate of the cover device. The implement may have a stop for the cover device, so that, during applying of the milking cluster, the cover device releases the milking cluster for the last part of its travel. As a result thereof, the cover device remains in a position near the rear of the animal, whilst the milking cluster advances to under the udder.

In accordance with a characteristic of the invention, the milking cluster is adjustable in substantially vertical direction by means of a quadrangle hinge-construction, the quadrangle hinge-construction possibly being in the form of a parallelogram, which is provided near the milking cluster. Furthermore, in accordance with the invention means are provided for moving the milking cluster in the lateral direction.

Preferably, the milking procedure proceeds automatically. For this purpose a computer can be used which is programmed such that all control operations proceed automatically.

If an animal, such as a cow, is to be milked, it passes through the entrance door at the rear end of the milking parlour. As soon as the cow is in the milking parlour the door is automatically closed. The cow is then stationed with one hind leg at one side of a raised portion in the centre of the milking parlour and the other hind leg at the other side of the raised portion in the centre of the milking parlour.

A flap extending approximately horizontally in the milking parlour floor is moved hydraulically, so that the flap is then in an upward direction. As a result thereof, the cow can not advance its hind leg and thus disturb the milking procedure with the hind leg.

The central raised portion is formed by two parts. One part is hydraulically movable to the left, the other part is hydraulically movable to the right. When these parts are moved, the hind legs of the cow are also moved in the lateral direction.

Because of this forced, lateral movement of the hind legs it is inter alia achieved that the animal can not stand on one hind leg and consequently the centre of the animal is positioned in the centre of the milking parlour, and that a space is created through which the milking cluster can advantageously be connected to the animal's udder from its rear.

As soon as the cow has been milked, the milking cluster moves in the rearward and upward direction to such a height that another animal can pass under it. The raised portion at the hind legs moves back to the centre again. The flaps which were moved to in front of the animal's legs move back again to an approximately horizontal position.

The exit door at the front of the milking parlour opens. The animal leaves the milking parlour and when the entrance door of the milking parlour opens another cow can enter again and be milked automatically.

During milking the cover device bears on the stop against the wall. As soon as the cow has been milked, the milking cluster is moved to the rear until the milking cluster is under the cover device. Then a second stop fastened to the arm of the milking cluster bears against the arm of the cover device and thus the milking cluster together with the cover device on top of it are moved to the rear in a safe manner, without it being possible for the milking cluster to be fouled. This is of particular interest when the milking cluster must be passed through the hind legs of the animal, for example a cow, for connection to the animal's udder.

For a detailed description of the invention, an embodiment of the implement for milking animals will now be described, by way of example, with reference to the accompanying drawings.

Figure 1 is a top view of an implement for milking animals ;
Figure 2 is a cross-sectional view along the line II-II of Figure 1 of the implement, a cow being shown which has a milking cluster connected to the udder ;
Figure 3 shows a part of Figure 2, containing further details ;
Figure 4 is a view according to the arrow IV in Figure 1 ;
Figure 5 is a view of the implement corresponding to Figure 4 ;
Figure 6 shows a further detail of the implement, the milking cluster being connected to the udder;
Figure 7 is an elevational view along the line VII-VII in Figure 6 ;
Figure 8 shows a detail corresponding to the line VIII-VIII in Figure 7, and
Figure 9 shows a detail corresponding to the line IX-IX in Figure 3.

In the different Figures, which illustrate the embodiment schematically, corresponding components are given the same reference numerals.

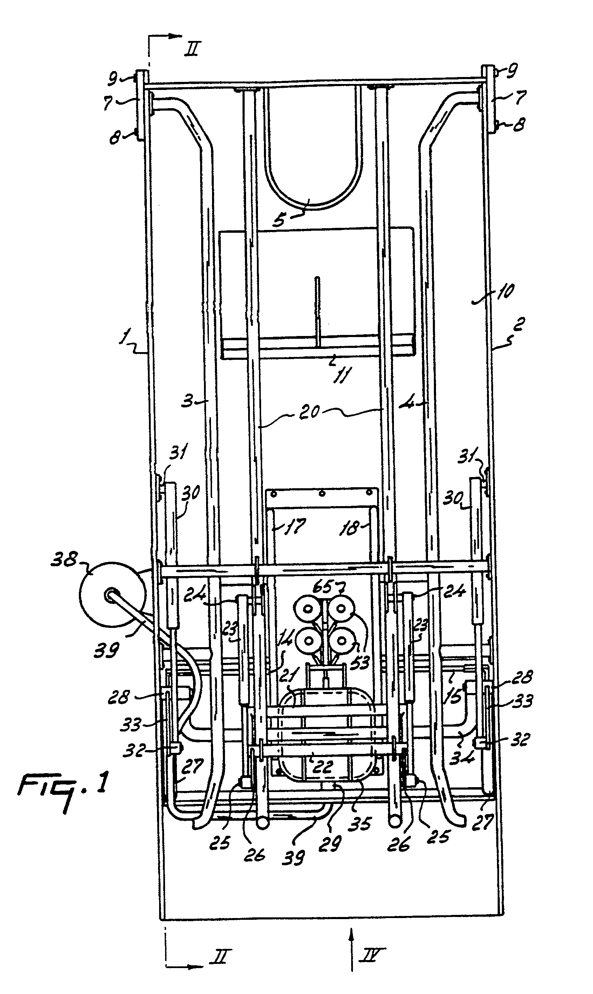

As is shown in Figure 1, the implement for milking animals has two side walls 1, 2, to which guide rods 3, 4 are connected, between which an animal, for example a cow, may be present. At its front end the milking parlour has a manger 5, in which fodder, for example concentrated fodder, can be fed in doses with the aid of means, not further shown.

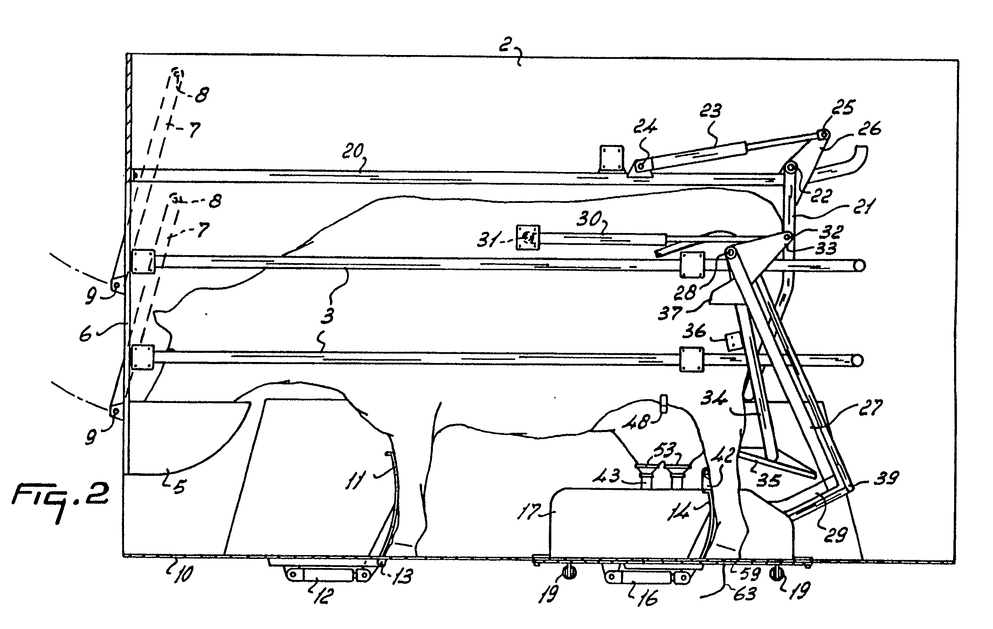

As will be apparent from Figure 2, the manger 5 is connected to an exit door 6 which can be moved by means of swivel arms 7 to such a position that an animal which leaves the milking parlour can pass under it. To that end, the swivel arms 7 are fitted at one end to the side walls 1, 2 by means of hinges 8, whilst the other ends of the swivel arms 7 are fitted to the entrance door 6 by means of hinges 9. Using drive means, not further shown, the exit door 6 can be opened and closed automatically or manually, as the case may be.

Near the place where the animal's fore legs may be positioned, the milking parlour floor 10 is provided with a flap 11, which in Figure 1 and Figure 2 is shown in its upward position. By means of the hydraulic or pneumatic cylinder 12 the flap 11 can be rotated around the substantially horizontal hinge pin 13. As a result thereof the flap 11 can be adjusted to a substantially horizontal position, the flap 11 then being at least partly flush with the floor, whilst in the upwardly directed position, as shown in Figures 1 and 2, the flap may constitute a stop against which the fore legs of the animal present in the milking parlour bear, as is shown in Figure 2.

Near the position where the hind legs of the animals may be, the floor of the milking parlour has two flaps 14, 15 which each constitute a stop for one of the hind legs. Also these flaps 14, 15 are movable by means of hydraulic or pneumatic cylinders 16 from a substantially horizontal position, the flaps then being, at least partly flush with the floor 10, to a substantially vertical position, as is shown in the Figures 1 and 2.

In addition, near the place where the animal's hind legs may be positioned, the milking parlour may have two guide plates 17, 18 which extend in the upward direction and in the longitudinal direction of the milking parlour. By means of hydraulic or pneumatic cylinders 19 the two guide plates 17, 18 can be moved from a central position, in which the guide plates are at a short distance from each other, to a position in which they are remote from each other, which position is shown in Figures 1 and 2.

As will be described in greater detail hereinafter, the flaps 14 and 15 are provided in milking parlour floor portions which together with the adjacent guide plates 17 and 18, can move away from each other in the lateral direction, e.g. for approximately 20 cms, so that the hind legs of an animal present in the milking parlour are moved apart. Each of the hind legs of the animal is positioned on a laterally movable portion of the floor.

When the guide plates 17, 18 have been moved away from each other in the lateral direction, so that the situation shown in Figures 1 and 2 has been obtained, the milking cluster 65 can be applied from the space between the two guide plates 17, 18, as will be described in greater detail in the sequel.

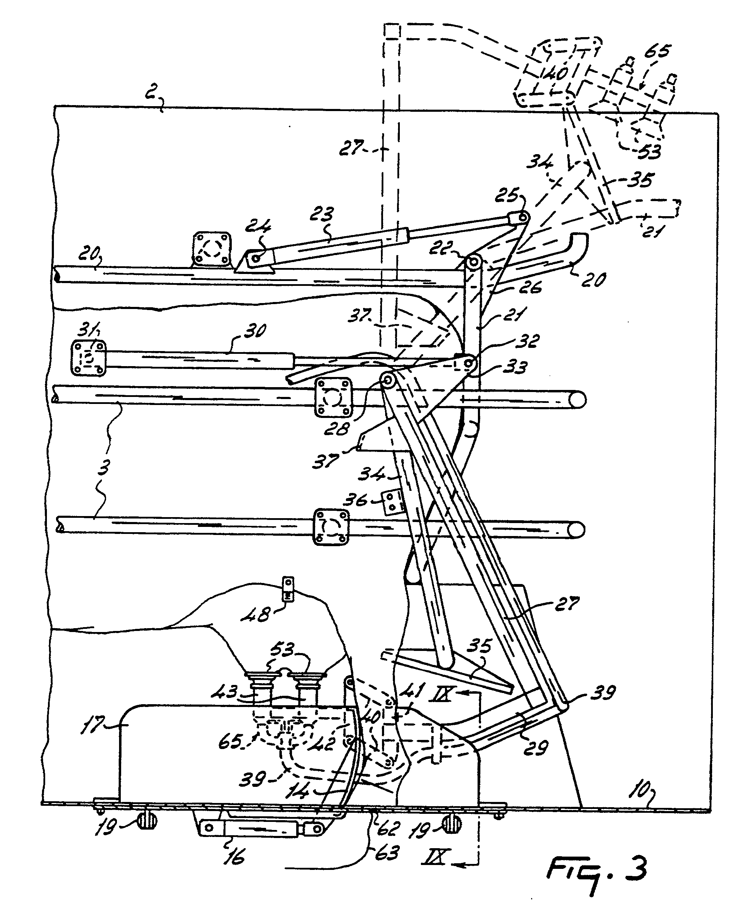

The implement furthermore comprises guide rods 20, which substantially extend over the animal in the milking parlour. These guide rods 20 may prevent the animal from making such movements that it steps over the flaps 11, 14 when in the vertical position. In addition, the guide rods 20 are provided with a mechanism which can bear against the posterior of the animal in the milking parlour. This mechanism is formed by a substantially U-shaped rod 21, which near its end is fastened by means of hinge pin 22 to the guide rods 20, this pin 22 extending substantially transversely of the milking parlour in the horizontal direction. The U-shaped rod 21 can be moved by means of the hydraulic or pneumatic cylinder 23, one end 24 of which is connected capable of hinging to a guide rod 20, whilst the other end is connected by means of hinge point 25 to a lever 26 fitted to the U-shaped rod. By means of the operating cylinder 23 the U-shaped rod can be moved from a substantially vertical position, in which the U-shaped rod bears against the posterior of the animal in the milking parlour, to an upward position, as shown in Figure 3 by means of broken lines, it being possible for the animal, when it enters the milking parlour, to pass under the U-shaped rod 21. After the animal has arrived in the milking parlour the U-shaped rod 21 can be moved down and push with a predetermined force against the animal, so as to drive it forward to the desired location. It is alternatively possible to move the U-shaped rod to a predetermined position, depending on the animal, so that the relevant animal can be positioned in the desired forward position.

The means for applying the milking cluster 65 have a substantially U-shaped frame 27 whose end is fastened to the side walls 1, 2 of the milking parlour by means of hinge points 28. The U-shaped frame 27 incorporates a supporting arm 29 which carries the milking cluster 65. The U-shaped frame 27 together with the supporting arm 29 and the milking cluster fastened thereto is capable of swivelling around hinge points 28 from an operative position, as shown in Figure 1, 2 and 3, to an inoperative position which is shown in Figure 3 by means of broken lines. For that purpose a hydraulic or pneumatic operating cylinder 30 is provided which is fastened by means of hinge 31 to the side wall 1, 2 of the milking parlour and whose other end is fastened by means of hinge 32 to a lever 33 fitted on the U-shaped frame 27. As can be seen from Figure 1, two operating cylinders 30 are provided, one on either side of the milking parlour.

A second, substantially U-shaped frame 34 is provided, capable of free rotation, by means of the hinges 28. A cover member 35 which is substantially constituted by a plate-shaped portion is fastened to this U-shaped frame 34. When the milking cluster 65 together with its supports 27, 29 is in the operative position, as shown in Figure 3, the frame 34 bears against a stop 36 provided at the side wall 1, 2 of the milking parlour. In this position, the cover member 35 will be capable of catching any excrements of the animal. When the frame 27 is swivelled to its inoperative position by means of the operating cylinder 30, the milking cluster 65 will move towards the cover member 35, whereafter the frame 24 comes into contact with carrier member 37 connected to the U-shaped frame 27. As a result thereof, the frame 34 is lifted from the stop 36 and the moving frame 27 carries it in the upward direction, so that the position indicated in Figure 3 by means of broken lines is reached.

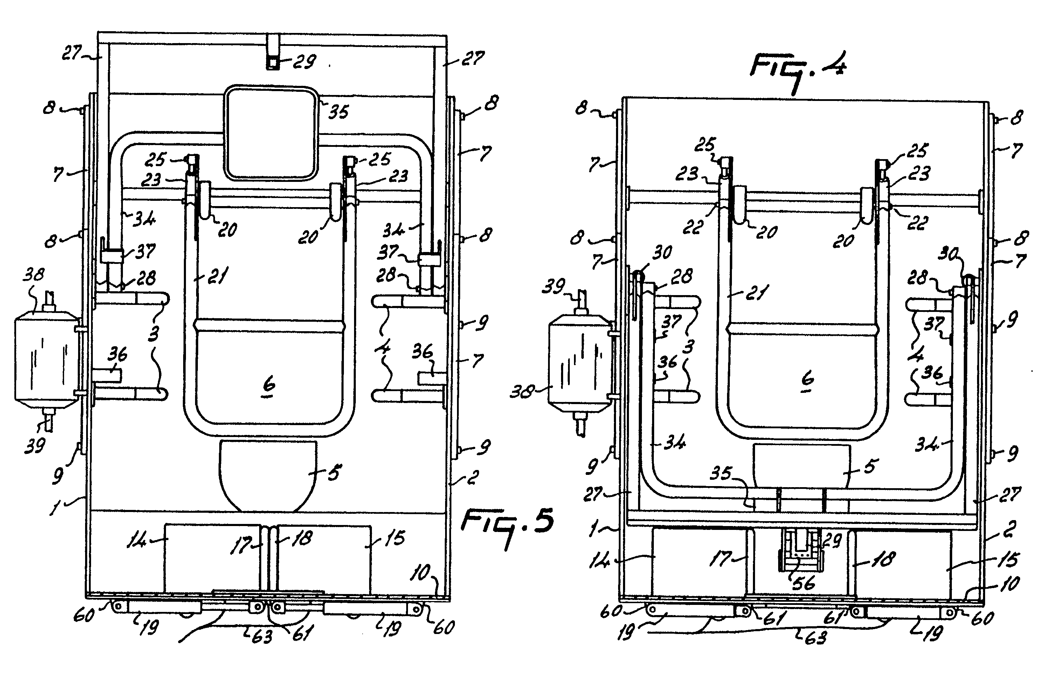

The Figures 4 and 5 schematically show a rear view of the implement. Both Figures show the substantially U-shaped rod 21 in its downward position. The milking cluster support and the cover member are shown in Figure 4 in the operative position and in the inoperative position in Figure 5. In addition, a milk container 38 is shown which is connected to the milking cluster through pipe 39.

Figure 5 shows the guide plates 17, 18 in the position in which they are at a short distance from each other. The guide plates 17, 18 can be moved apart to the position shown in Figure 4, by means of operating cylinders 19. As is illustrated by Figures 4 and 5, the flaps 14 and 15 which are shown in the vertical position move laterally together with the guide plates 17 and 18, respectively. Also the floor portion near the flaps 14 and 15 perform the same movements.

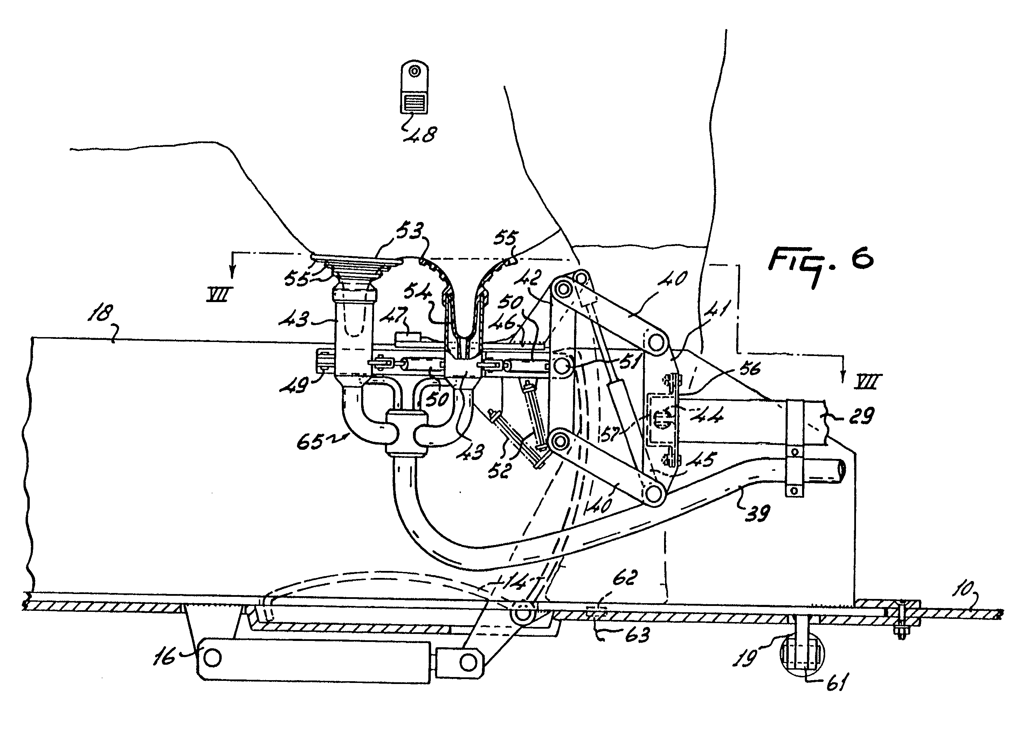

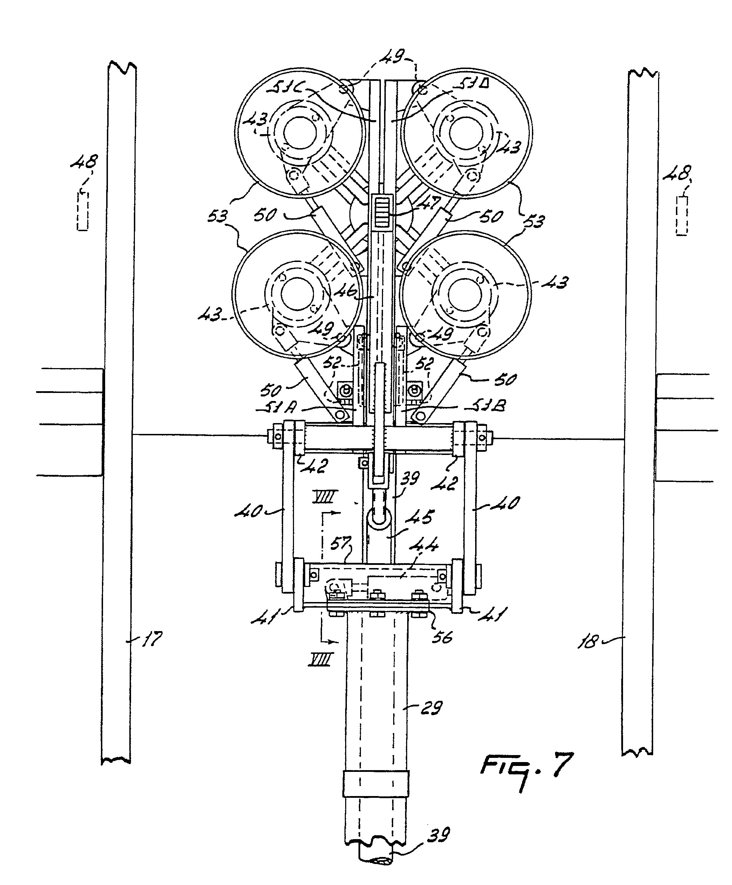

Figures 6 and 7 show the milking cluster 65 and the manner in which they are fastened to supporting arm 29 in greater detail. The milking cluster is fastened to the supporting arms 29 by means of a parallelogram construction, which parallelogram construction has four connecting elements 40 which extend substantially in parallel with each other and are fastened capable of swivelling to a supporting element 41 which is slidably connected to supporting arm 29, and also to the support 42 for the teat cups 43. The support 42 of the teat cups 43 is laterally movable because supporting element 41 can perform a corresponding movement relative to the supporting arm 29. To this end, a hydraulic or pneumatic operating cylinder 44 is provided, one end of which is connected to the supporting element 41 and the other end to the supporting arm 29. The support 42 of the teat cups 43 is movable in the vertical direction by means of the parallelogram construction, which vertical movement can be controlled by operating cylinder 45, one end of which is connected capable of swivelling to the supporting member 41 and the other to the support 42, which support 42 is furthermore rigidly connected to an arm 46 at whose end a sensor or indicator 47 is provided. It will be clear that in the described manner the support 42 can be adjusted to any desired position, which position corresponds to the position of the sensor 47. In the embodiment shown the animal is provided with two orientation means 48 arranged on its skin. These orientation means 48 may comprise a small transmitter transmitting signals which are received by the sensor 47, so that the position of sensor 47 relative to the orientation means 48 can be recorded. Thus, the support 42 of the teat cups 43 can be controlled to a desired position relative to the animal present in the milking parlour, with the object of connecting the teat cups to the teats of the udder.

Relative to the support 42 each of the teat cups 43 is movable in a horizontal plane. To that end, each teat cup 43 can rotate around an associated vertical hinge pin 49. This swivelling motion is effected for each of the teat cups 43 by a pneumatic or hydraulic operating cylinder 50 associated with each of the teat cups 43. In addition to this feature of moving the support in a horizontal plane, each of the teat cups is spring-loaded in the vertical direction, as each of the teat cups 43 is arranged capable of swivelling around horizontal pin 51 to the support 42. To that end, each of the teat cups is provided with a teat cup arm 51A, resp. 51B, 51C and 51D which is swivable around hinge pin 51 and is supported by a helical spring 52. In the described manner, each of the teat cups 43 can move from a horizontal plane downwards by spring action, whilst in addition each of the teat cups can be adjusted in that horizontal plane to a desired position relative to the other teat cups.

Prior to applying the milking cluster 65, the teat cups 43 are brought to the appropriate position for the relevant animal. This position can be manually adjusted, it is however alternatively possible for the required data of the animal to be stored in a computer, so that the correct position of the teat cups can be automatically adjusted after the animal present in the milking parlour has been recognized by electronic means. Not only the relative position of the teats of the udder to each other, but also the position of the teats relative to the orientation means 48 may have been processed as data in a computer, so that the milking cluster, after the teat cups have been adjusted to the appropriate position, can be applied in the correct place relative to the udder in the upward direction, controlled by the computer.

So as to facilitate applying the teat cups 43, the teat cups 43 have funnel-shaped catching means 53 made of flexible material. The flexible catching device 53 may be an integral part of other flexible portions 54 of the teat cups. As can be seen from Figure 6, the funnel-shaped catching device 53 has interconnected annular portions 55 of different diameters. Thus, the shape of the flexible catching device can be easily adapted to the shape of the udder near the relevant teat.

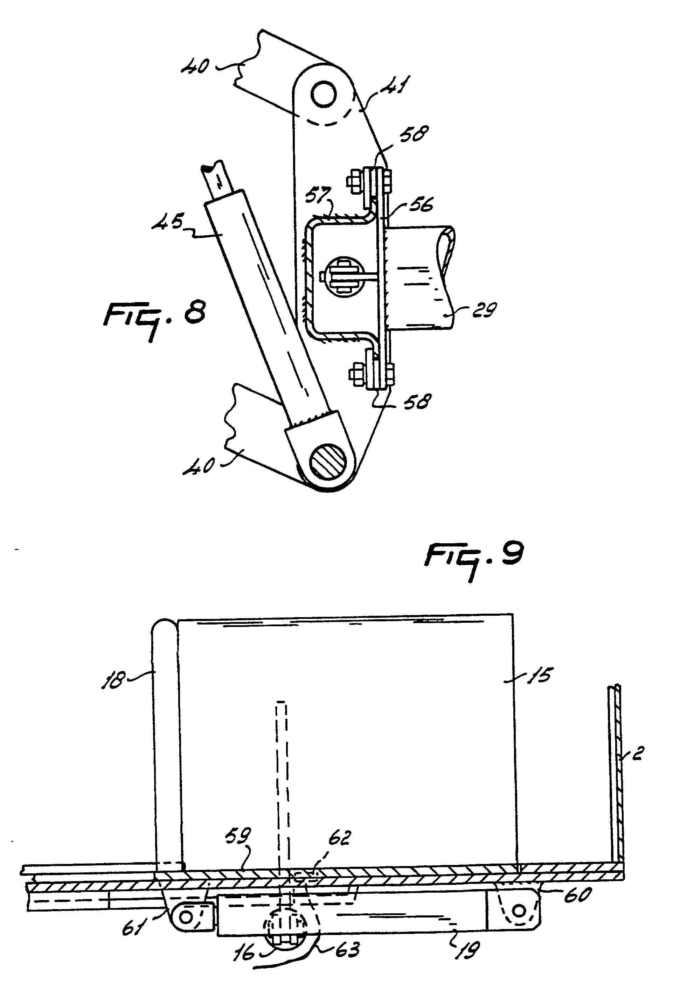

Figure 8 shows a further detail of the mode in which the supporting element 41 is connected to supporting arm 29. This Figure shows that supporting arm 29 has a flange 56. A profiled beam 57 which is guided capable of movement in guide members 58 connected to the flange 56 is connected to supporting element 41. Operating cylinder 44 has one end connected to flange 56 and the other end to the supporting element 41, so that loading the cylinder causes the supporting element 41 to shift relative to the supporting arm 29.

Figure 9 illustrates a further detail of Figure 4. The flaps 15 and 18 are shown in their upward positions. Both flaps are fastened to the moving portion 59 of the milking parlour floor, which portion is laterally movable by means of hydraulic or pneumatic operating cylinder 19, which has one end connected to a support 60 fastened to the fixed portion of the milking parlour floor and the other end to the support 61 fastened to the movable portion 59 of the floor. Figure 9 also shows the operating cylinder 16 for operating the flap 15. A sensor 62 is provided in the movable portion 59 of the floor so as to make it possible to observe whether the hind legs of the animal are at the desired place. For that purpose sensor 62 is connected by means of line 63 to an arrangement for recording the signal produced by sensor 62.

The implement operates as follows :

Before an animal, a cow in the example, enters the milking parlour, the milking cluster 65 is adjusted to its inoperative position and the U-shaped rod 21 is also in its raised position, so that the cow can pass under both elements. In addition, the guide plates 17, 18 which extend in the longitudinal direction of the milking parlour and substantially in the vertical direction, have been adjusted to the position shown in Figure 5, that is to say they are adjusted such that they are near to each other in the centre of the milking parlour. In addition, the flaps 14, 15 are in the substantially horizontal position and the flap 11 is in the upward direction. The exit door 6 is closed, so that the manger 5 is at the front of the milking parlour. When the cow enters the milking parlour it will advance as far to the front as possible in order to bring its head to the manger 5.

Doing so, the cow will automatically place its fore legs near the flap 11. Thereafter the flaps 14 and 15 are adjusted to the upward position and the U-shaped rod 21 is moved down. If a hind leg of the cow is positioned on a flap 14, 15, this leg will slide from the flap when the latter is adjusted to the upward position, and arrive in the desired place. After the flaps 14, 15 have been adjusted to the upward position and the U-shaped rod 21 bears on the posterior of the cow, the movable portions 59 of the floor move laterally, thus creating a space between the guide plates 17 and 18. As a result thereof, the hind legs of the animal are also moved apart. The sensors 62 can detect whether the two hind legs are in the appropriate place, whereafter the milking cluster can be connected. For that purpose it is determined by means of electronic means which cow is present in the milking parlour, for example by means of a collar provided around the cow's neck, comprising an information carrier or, as shown in the embodiment, one or more information carriers 48 which at the same time form part of the orientation means, and which are, for example, provided at the double skin of the cow near the hind legs.

Depending on the cow present in the milking parlour, the milking cluster is adjusted, that is to say the teat cups are positioned relative to each other.

The milking cluster moves from the inoperative position to the operative position by swivelling down of the U-shaped frame 27, the cover device 35 moving together with the milking cluster until the frame 34 of the cover device 35 bears against the stop 36. The milking cluster then moves further under the cow, between the guide plates 17 and 18. This causes the milking cluster 19 to be adjusted in a position under the udder of the cow, which position depends on the cow present in the milking parlour, whereafter the milking cluster is moved upwards until the teats are located in the teat cups.

It is alternatively possible for the travel of the milking cluster to the udder of the cow to be partially or fully determined by the orientation means which detect the position of the milking cluster relative to the udder. To that end the sensor 47 pulls-in signals produced by the orientation means 48, and in response to which the sensor 47 can determine its position relative to the orientation means 48. The milking cluster already adjusted for the relevant cow can for that purpose move in any direction, in the longitudinal direction of the milking parlour by means of swivelling of the U-shaped frame 27, in the lateral direction relative to the milking parlour by means of operating cylinder 44, and in the upward direction by means of operating cylinder 45. During the upward movement of the milking cluster the individual teat cups can move down by spring action, which will occur when the relevant catching device 53 is bearing against the cow's udder.

## Claims

1. An implement for milking animals, such as cows, comprising a milking parlour and a milking machine with a milking cluster, whereby the teat cups of the milking cluster are rotatable around a substantially horizontal axis relative to a support and each of the teat cups is capable to move under spring supporting load in a substantially vertical direction independent of the other teat cups, characterized in that the horizontal pivoting axis (51) nearest to the milking cluster (65) is located sidewards of the milking cluster (65).

2. An implement as claimed in claim 1, characterized in that each of the teat cups (43) is separately rotatable around said axis (51) by means of teat cup arms (51A, 51B, 51C and 51D respectively).

3. An implement as claimed in claim 1 or 2, characterized in that each of the teat cups (43) of the milking cluster (65) is rotatable around an associated vertical hinge pin (49) by means of pneumatic or hydraulic operating drive means (50).

4. An implement as claimed in any one of the preceding claims, characterized in that means are provided for automatically applying the milking cluster (65) from the rear of the animal and coupling the milking cluster to the udder of the animal.

5. An implement as claimed in any one of the preceding claims, characterized in that a teat cup (43) is provided with a substantially funnel-shaped, flexible catching device (53).

6. An implement as claimed in any one of the preceding claims, characterized in that a cover device (35) is provided for covering the milking cluster (65) at instants at which the milking cluster is not connected to the animal's udder.

7. An implement as claimed in claim 6, characterized in that the cover device (35) is provided with an approximately horizontally extending plate, the rear end of the plate being at lower level than its front end when the cover device is in a stationary position.

8. An implement as claimed in any one of the preceding claims, characterized in that the milking cluster (65) is adjustable in substantially vertical direction by means of a quadrangle hinge-construction.

9. An implement as claimed in claim 8, characterized in that the quadrangle hinge-construction (40, 41, 42) has the form of a parallelogram, which is provided near the milking cluster.

10. An implement as claimed in any one of the preceding claims, characterized in that means (44) are provided for moving the milking cluster in the lateral direction.

## Patentansprüche

1. Vorrichtung zum Melken von Tieren, wie zum Beispiel Kühen, mit einem Melkstand und einer Melkmaschine mit Melkgeschirr, bei der die Zitzenbecher des Melkgeschirrs um eine im wesentlichen horizontale Achse relativ zu einem Träger drehbar sind und jeder Zitzenbecher unter Federkraftbelastung unabhängig von den anderen Zitzenbechern in im wesentlichen vertikaler Richtung bewegbar ist, dadurch gekennzeichnet, daß die horizontale Schwenkachse (51), die dem Melkgeschirr (65) am nächsten liegt, seitlich von dem Melkgeschirr (65) angeordnet ist.

2. Vorrichtung nach Anspruch 1, dadurch gekennzeichnet, daß jeder der Zitzenbecher (43) für sich um die genannte Achse (51) mittels Zitzenbecher-Armen (51A, 51B, 51C bzw. 51D) schwenkbar ist.

3. Vorrichtung nach Anspruch 1 oder 2, dadurch gekennzeichnet, daß jeder der Zitzenbecher (43) des Melkgeschirrs (65) um einen zugeordneten vertikalen Gelenkstift (49) mittels eines pneumatischen oder hydraulischen Antriebs (50) schwenkbar ist.

4. Vorrichtung nach einem der vorhergehenden Ansprüche, dadurch gekennzeichnet, daß eine Einrichtung vorgesehen ist, um das Melkgeschirr (65) automatisch von der Rückseite des Tieres zuzuführen und das Melkgeschirr an dem Euter des Tieres anzubringen.

5. Vorrichtung nach einem der vorhergehenden Ansprüche, dadurch gekennzeichnet, daß ein Zitzenbecher (43) mit einer im wesentlichen trichterförmigen, flexiblen Greif-vorrichtung (53) versehen ist.

6. Vorrichtung nach einem der vorhergehenden Ansprüche, dadurch gekennzeichnet, daß eine Abdeckvorrichtung (35) vorgesehen ist zum Abdecken des Melkgeschirrs (65) während der Zeit, in der das Melkgeschirr nicht an dem Euter des Tieres angebracht ist.

7. Vorrichtung nach Anspruch 6, dadurch gekennzeichnet, daß die Abdeckvorrichtung (35) mit einer annähernd horizontal ausgerichteten Platte versehen ist, deren rückseitiges Ende in einer stationären Position der Abdeckvorrichtung niedriger liegt als ihr vorderes Ende.

8. Vorrichtung nach einem der vorhergehenden Ansprüche, dadurch gekennzeichnet, daß das Melkgeschirr (65) in im wesentlichen vertikaler Richtung mittels einer Viergelenk-Konstruktion einstellbar ist.

9. Vorrichtung nach Anspruch 8, dadurch gekennzeichnet, daß die Viergelenk-Konstruktion (40, 41, 42) die Form eines Parallelogrammes hat, das nahe dem Melkgeschirr vorgesehen ist.

10. Vorrichtung nach einem der vorhergehenden Ansprüche, dadurch gekennzeichnet, daß eine Einrichtung (44) zum Bewegen des Melkgeschirrs in Querrichtung vorgesehen ist.

## Revendications

1. Installation pour traire des animaux, tels que des vaches, comprenant une stalle de traite et une machine à traire avec un groupe de ventouses, dans laquelle les ventouses du groupe de ventouses peuvent pivoter autour d'un axe sensiblement horizontal par rapport à un support, et chacune des ventouses peut se mouvoir en étant soumise à une charge supportante à ressort, dans une direction sensiblement verticale, indépendamment des autres ventouses, **caractérisée** en ce que l'axe horizontal (51) de pivotement le plus proche du groupe de ventouses (65) est situé latéralement par rapport au groupe de ventouses (65).

2. Installation selon la revendication 1, caractérisée en ce que chacune des ventouses (43) peut pivoter séparément autour dudit axe (51) au moyen de bras porteurs de ventouses (51A, 51B, 51C et 51D, respectivement).

3. Installation selon les revendications 1 ou 2, caractérisée en ce que chacune des ventouses (43) du groupe de ventouses (65) peut pivoter autour d'un pivot vertical associé (49) au moyen d'un moyen d'entrainement pneumatique ou hydraulique (50).

4. Installation selon l'une quelconque des revendications précédentes, caractérisée en ce que des moyens sont prévus pour appliquer automatiquement le groupe de ventouses (65) à partir de l'arrière de l'animal et pour coupler le groupe de ventouses au pis de l'animal.

5. Installation selon l'une quelconque des revendications précédentes, caractérisée en ce qu'une ventouse (43) est munie d'un dispositif de capture flexible (53) ayant sensiblement la forme d'un entonnoir.

6. Installation selon l'une quelconque des revendications précédentes, caractérisée en ce qu'un dispositif à couvercle (35) est prévu pour couvrir le groupe de ventouses (65) aux instants où le groupe de ventouses n'est pas relié au pis de l'animal.

7. Installation selon la revendication 6, caractérisée en ce que le dispositif à couvercle (35) est muni d'une plaque qui s'étend approximativement horizontalement, l'extrémité postérieure de la plaque étant à un niveau plus bas que son extrémité antérieure quand le dispositif à couvercle est en position stationnaire.

8. Installation selon l'une quelconque des revendications précédentes, caractérisée en ce que le groupe de ventouses (65) est réglable dans un sens sensiblement vertical au moyen d'une structure articulée quadrangulaire.

9. Installation selon la revendication 8, caractérisée en ce que la structure articulée quadrangulaire (40, 41,42) a la forme d'un parallèlogramme qui est prévu près du groupe de ventouses.

10. Installation selon l'une quelconque des revendications précédentes, caractérisée en ce que des moyens (44) sont prévus pour mouvoir le groupe de ventouses dans le sens latéral.

FIG.1

Fig.2

FIG. 3

FIG. 4

FIG. 5

EP 0 313 109 B1

FIG. 6

EP 0 313 109 B1

FIG. 7

FIG. 8

FIG. 9